# EUROPEAN PATENT SPECIFICATION

(11) **EP 2 450 789 B1**
(45) Date of publication and mention of the grant of the patent: **20.11.2013**
(21) Application number: 11177106.9
(22) Date of filing: 10.08.2011
(51) Int. Cl.: G06F 9/44, H04L 29/12, G06Q 10/06

(54) **Service collaboration system**
Gemeinschaftliches Dienstsystem
Système de collaboration de service

(30) Priority: 05.10.2010 JP 2010225639
(43) Date of publication of application: 09.05.2012
(73) Proprietor: Hitachi, Ltd., Chiyoda-ku Tokyo 100-8280 (JP)
(72) Inventor: Yato, Akifumi, Tokyo, 100-8220 (JP); Kaji, Tadashi, Tokyo, 100-8220 (JP); Hayashi, Naoki, Tokyo, 100-8220 (JP); Irube, Shinichi, Tokyo, 100-8220 (JP)
(74) Representative: MERH-IP Matias Erny Reichl Hoffmann

(56) References cited:
- CN-A- 101 859 249
- US-A1- 2011 173 405
- "Chapter 1, 2, 5" In: Deamma Bradshaw, Mark Kennedy: "Oracle BPEL Process Manager Developer's Guide 10g(10.1.3.1.0)", 31 January 2007 (2007-01-31), Oracle, XP002676988, vol. B2898103, pages FP-5-26, * Chapter 5 *

## Description

### BACKGROUND OF THE INVENTION

The present invention is one that pertains to service collaboration systems and in particular to a system implementing service collaboration including user interaction management.

In recent years, there has been an increase in new service provision modes where needed functions only are utilized when needed by a user. E.g., these are service provision modes like SaaS (Software as a Service) which is a new software utilization mode devised so that a user can freely choose a wanted function only and utilize the service or cloud computing, which combines computing resources on the Internet, to provide application services having higher added value for the end user.

As a mechanism of combining functions distributed in the network and providing services in this way, there is BPEL (Business Process Execution Language) which is a technical specification established by the standardization body OASIS (Organization for the Advancement of Structured Information Standards). In BPEL, existing Web services are combined and the definition of the execution sequence of a series of Web services and a sequence control method are described as business processes with XML (extensible Markup Language). And then, the BPEL engine interprets the XML of the business processes, calls the Web services in sequence, and controls the calling sequence.

However, the basic mechanism of BPEL assumes business processes devised so that the BPEL engine calls each Web service in sequence and executes it automatically. It is not considered that human operations (Human Computer Interaction : HCI) are interposed in each of the tasks executed as business processes such as in operations like approval processing and data entry in work flow processes.

As technology enabling the execution of business processes involving HCI, there is established BPEL4People (WS-BPEL Extension for People) which is a BPEL extension specification. In the processing of business processes carried out by BPEL, BPEL4People collaborates with the BPEL engine, taking the function of implementing HCI to be an activity occurring in BPEL. Specifically, during business process execution, a work flow service allocating human tasks is executed as a Web service call and the work flow service notifies the person in charge of executing the task with a technique such as e-mail, Messenger, or 3PCC (3rd Party Call Control 1). When the execution of all tasks is completed, the execution result is returned to the BPEL engine.

### SUMMARY OF THE INVENTION

By applying BPEL4People technology in business processes including HCI, it becomes possible to execute business processes of the work flow type. However, in the prior art, when carrying out HCI, after the work flow service has notified the person in charge of the task of the execution of the task, there occurs a time lag until the person in charge recognizes the notification and starts execution of the task. Consequently, in simultaneous business processes, there is a possibility that the session between the application service and the user terminal expires during the time until a response is returned after a portal site providing an application service to a user terminal has requested the execution of the business process to the BPEL engine.

Also, in a business process involving a plurality of HCI's, HCI requests are transmitted from a plurality of Web services to the user terminal. In this way, a number of screens, from each of the plurality of Web services, are displayed on the user terminal, putting pressure on the area of the screen on the user terminal.

In this way, there is a multitude of problems brought by working modes of business processes involving HCI and for each mode, and executing a business process so as to satisfy various modes has not been shown with the BPEL4People specification.

In order to solve the aforementioned problem, the disclosed user interaction type service collaboration system is newly provided with a means of controlling the process callbacks from Web services to the user terminal in order to control the start of HCI between Web services and the user terminal.

Specifically, a user interaction type service collaboration system, in which a user terminal calls Web service provisioning servers in sequence via a Web portal server and a service scenario execution server, and each Web service provisioning server carries out interaction processing with the user terminal, is provided with a callback control server having:
a callback control part responding to reception, from the Web service provisioning server of the callback request accompanied by a callback user ID, and transmitting an interaction processing start request to the user terminal using an ID identifying the user terminal or a session due to the aforementioned user terminal; and
a callback ID management part associating and managing IDs and callback user IDs and acquiring IDs corresponding to callback user IDs.

It becomes possible to execute various business processes in business process execution including Human Computer Interaction (HCI).

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram of a user interaction type service collaboration system.
Fig. 2 is a block diagram of the hardware of each constituent element of a user interaction type service collaboration system.
Fig. 3 is an example of a service utilization sequence.
Fig. 4 is an example of the execution sequence of a collaborative service.
Fig. 5A is an example of a callback management table.
Fig. 5B is an example of a scenario table.
Fig. 5C is an example of a service table.
Fig. 5D is an example of an execution process management table.
Fig. 6A is an example of scenario information.
Fig. 6B is an example of a scenario execution request.
Fig. 6C is an example of a scenario execution response.
Fig. 7A is an example of a collaborative service execution request.
Fig. 7B is an example of collaborative service execution response.
Fig. 7C is an example of a user callback request.
Fig. 7D is an example of user callback response.

### DESCRIPTION OF THE EMBODIMENT

Hereinafter, there will be given a description in detail of an embodiment of the present invention using the drawings. Further, in case there is a plurality of identical elements among the constituent elements of the system of the present embodiment, the same are expressed as terminal US-1 and terminal US-2. Also, in the case of describing a plurality of elements together, e.g. in the case of describing together a plurality of terminals, like terminal US-1 and terminal US-2, the same will simply be expressed as the "terminal" by omitting the end.

A description regarding an example, of the present embodiment, of a user interaction type service collaboration system using BPEL (Business Process Execution Language) will be given. BPEL is a technical specification established in the standardization body OASIS and is a mechanism in which the definition of the execution sequence of a series of Web services and a sequence control method are described as business processes with XML.

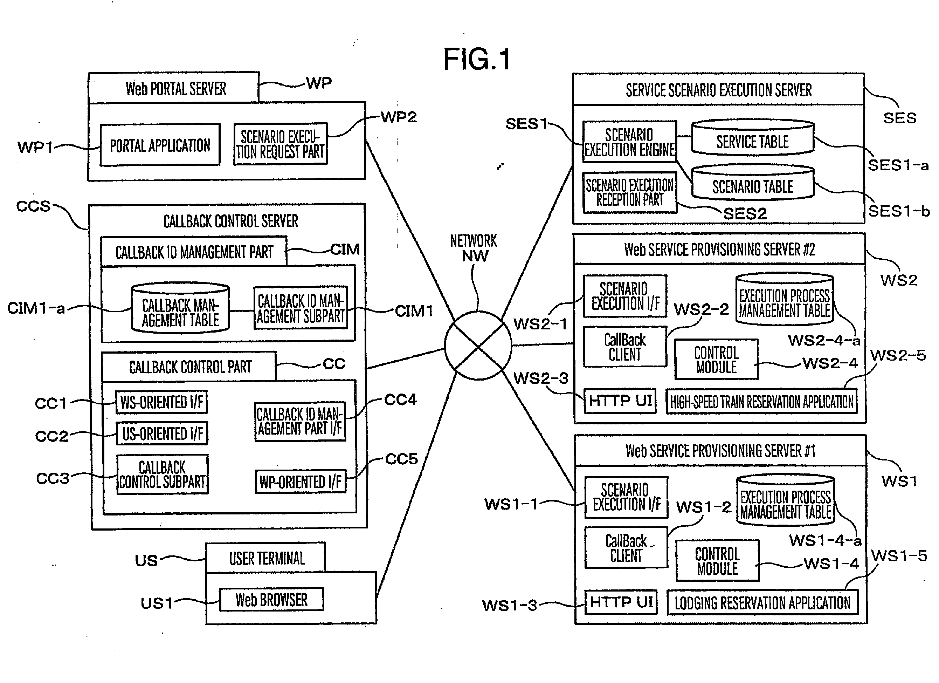

Fig. 1 is a block diagram of a user interaction type service collaboration system, in which a user calls a sequential Web service provisioning server WS via a Web portal server WP, the system carrying out service collaboration while performing user interaction between a user terminal US and Web service provisioning server WS as the need arises. In the same diagram, the user interaction type service collaboration system is constituted by:
a terminal US, a Web portal server WP, a callback control server CCS, a service scenario execution server SES, and a Web service provisioning server WS. Each of the aforementioned constituent elements of the user interaction type service collaboration system is respectively connected with a network NW

In the system configuration of the present embodiment, the communication from callback control server CCS to user terminal US utilizes an HTTP redirection when a callback is carried out from a Web service provisioning server via callback control server CCS to a user terminal US. The system configuration can also be considered in other ways. As another system configuration, it can be considered that a callback control part CC and a callback ID management part CIM are not in the same device, it being possible to consider a mode in which callback ID management part CIM is present as a function of Web portal server WP. And then, callback ID management part CIM manages the mail address of the user and carries out the callback using this e-mail address.

As yet another system configuration, callback control part CC and callback ID management part CIM are not in the same device, it being possible to consider a mode in which callback ID management part CIM is present as a management server managing various IDs. And then, Web portal server WP makes an enquiry to callback ID management part CIM, acquires a communication ID managed by a carrier from a user ID used by the portal and carries out callback using the same communication ID. In this case, in user terminal US, a launcher function receiving the callback request and newly launching a Web browser US1 becomes newly necessary.

Hereinafter, definitions of vocabulary needed for explaining the present invention will be carried out. The expression "user" refers to a human being operating a user terminal US. "Callback" refers to the fact of transmitting a message from Web service provisioning server WS to a user terminal US in order to carry out HCI. The expression "scenario" indicates the name of a business process execution procedure which becomes necessary for a service scenario execution server SES to call Web services in sequence and execute the same.

Next, a statement will be given regarding the constituent elements of a user interaction type service collaboration system of the present invention.

User Terminal US is a device that carries out communication between Web portal server WP and Web service provisioning server WS and is provided with a Web browser US1 carrying out the aforementioned communication.

Web portal server WP is a device that carries out communication between callback ID management part CIM and terminal US and also processes the scenario execution result due to a service scenario execution server SES and furnishes the same as Web contents to user terminal US. Web portal server WP is provided with: a portal application WP1 that carries out communication with user terminal US and performs operations like receiving input information from user terminal US and converting the scenario execution result into the HTML (Hyper Text Markup Language) format and presenting the same to user terminal US; and a scenario execution request part WP2 that requests scenario execution via callback ID management part CIM to service scenario execution server SES.

A callback control server CCS is a device for controlling user interaction between terminal US and Web service provisioning server WS and is constituted by callback control part CC and callback ID management part CIM.

Callback control part CC is a constituent element that carries out starts and control of human interaction between terminal US and Web portal server WP and is provided with:
a WS-oriented interface CC1 carrying out communication with Web service provisioning server WS;
a US-oriented interface CC2 carrying out communication with user terminal US;
a callback control part CC3 that, together with controlling the user interaction between user terminal US and Web service provisioning server WS, transfers user callback requests to callback ID management part CIM managing the corresponding user callback IDs;
a callback ID management part interface CC4 carrying out communication with callback ID management part CIM; and
a WP-oriented interface CC5 carrying out communication with Web portal server WP

Callback ID management part CIM is a device managing callback user IDs for uniquely identifying with callback using users and callback control parts CC, for each user, that is provided with a callback management part CIM1 that, together with storing and managing callback user IDs, carries out communication with callback control part CC. Also, callback management part CIM1 is provided with a callback management table CIM1-a.

Service scenario execution server SES is a device that, on the basis of scenario information described with BPEL, calls Web services in sequence, and executes the same. Service scenario execution server SES determines and controls the service execution sequence on the basis of scenario information and is provided with:
scenario execution engine SES1 calling Web services in sequence and scenario execution reception part SES2 carrying out communication with callback ID management part CIM. Also, scenario execution engine SES1 is provided with a service table SES1-a and a scenario table SES1-b.

A Web service provisioning server WS is a device that, together with furnishing Web services with respect to scenario execution server SES, carries out processing of user interaction with terminal US. Web service provisioning servers WS are provided with:
a scenario execution interface WS-1 carrying out communication with scenario execution server SES;
a callback client WS-2 requesting callbacks to callback control part CC;
an HTTP UI (User Interface) WS-3 carrying out communication with user terminal US;
a control module WS-4 controlling the execution of callback processing and the service execution result; and
an application WS-5 furnished with respect to user terminal US. Control module WS-4 is provided with an execution process management table WS-4-a.

Further, in the present embodiment, as a specific Web service provisioning server WS system, there is one with Web service provisioning server WS1 and Web service provisioning server WS2 as constituent system components. Web service provisioning server WS1 and Web service provisioning server WS2 are provided, respectively, with a lodging reservation application WS1-5 and a high-speed train reservation application WS2-5.

Network NW may be a private network like a corporate LAN or an open network like the Internet.

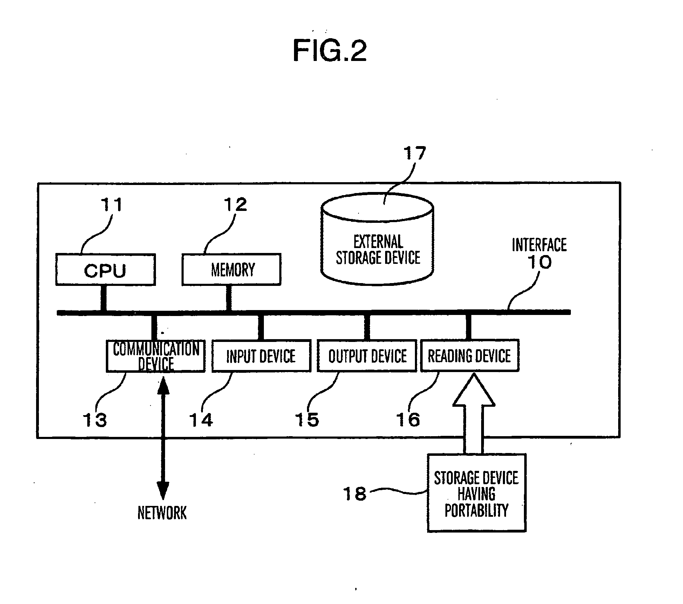

Fig. 2 is a diagram illustrating by example the hardware configuration of an information processing device that is a constituent element of Fig. 1. These devices - a CPU (Central Processing Unit) 11, a memory 12, a communication device 13 for carrying out communication with other devices via the Internet or a LAN, an input device 14 such as a keyboard or a mouse, an output device 15 such as a monitor or a printer, a reading device 16, and an external storage device 17 such as a hard disk - are connected via the Internet 10. Also, it is possible for a portable storage medium 18 such as an IC card or a USB memory to be connected with reading device 16.

As for each of the constituent elements of the user interaction type service collaboration system, the programs implementing these are loaded into memory 13 and are embodied by being executed by means of CPU 11. These programs may be stored in advance in external storage device 17 of the aforementioned information processing unit or may be introduced into the external storage device from another device via a medium that can be utilized by reading device 16 or communication device 12 and the concerned information processing device. The expression "medium" refers e.g. to a storage medium 18 that can be detached from reading device 16 or a network that can be connected with communication device 13 or a carrier wave or digital signal propagating in a network. And then, after the program has been temporarily stored in external storage medium 17, it may be loaded into memory 12 therefrom and executed in CPU 11 or it may, without being stored in external storage device 17, be directly loaded into memory 12 and executed in CPU 11.

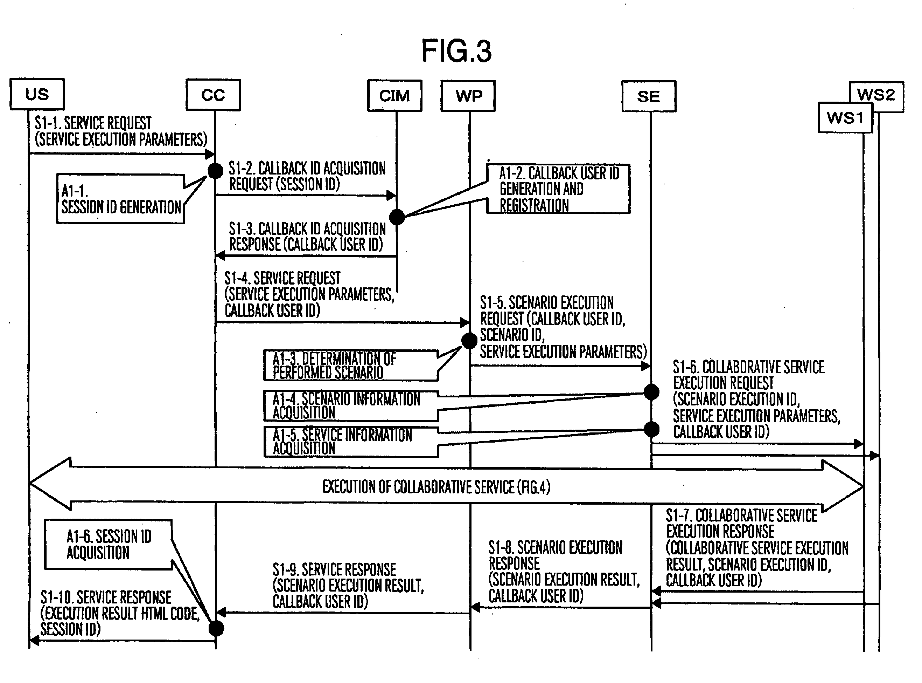

Hereinafter, using the example of the service utilization sequence of Fig. 3, a description will be given regarding the operations, in a user interaction type service collaboration system, in the case where a user, using user terminal US, utilizes application WP1 furnished by Web portal server WP.

Further, as a concrete scenario executed by the user interaction type service collaboration system, there is prepared a scenario in which a user carries out reservations of a lodging facility and an airplane through a travel portal. If a specific URL (Uniform Resource Locator) is accessed by user terminal US, portal application WP1 displays a lodging facility and airplane reservation screen. And then, if the user inputs conditions regarding lodging facilities and airplanes through a Web browser US1 in user terminal US, portal application WP1 receives the input information as service execution parameters and the same are transferred together with lodging facility and airplane reservation scenario ID via callback ID management part CIM to scenario execution request part WP2.

First, the user transmits a service request S1-1 including service execution parameters as arguments to callback control part CC through Web browser US 1 of user terminal US. In service request S1-1, there is utilized the GET message of the HTTP (Hyper Text Transfer Protocol) defined in RFC (Request For Comments) 2616 in IETF (Internet Engineering Task Force).

When US-oriented interface CC2 of callback control part CC receives service request S1-1 from user terminal US, it issues a session ID identifying communication with user terminal US and registers the same in memory 12 (A1-1). Below, there is described crude control using a session ID identifying communication with user terminal US, but an ID identifying user terminal US may be used. Next, callback ID management part interface CC4 transmits a callback ID acquisition request S1-2 including the session ID as an argument to callback ID management part CIM. Callback ID acquisition request S1-2 is binary data including the session ID and is transmitted to callback ID management part CIM by socket communication.

When callback ID management subpart CIM1 of callback ID management part CIM receives callback ID acquisition request S1-2 from callback control part CC, it issues a callback user ID based on the session ID, associates it with a session ID, and registers the same in callback management table CIM1-a (A1-2).

The callback user ID is issued by Web portal server WP as an ID including a session ID identifying user terminal US and identification information about callback control server CCS relayed on the occasion of callback processing. E.g., in case the session ID is "12345678" and the URI (Uniform Resource Identifier) identifying callback control server CCS is "ccs01.com", the callback user ID is issued as "12345678@ccs01.com" so as to link the session ID and the URI of the callback control server CCS one-to-one.

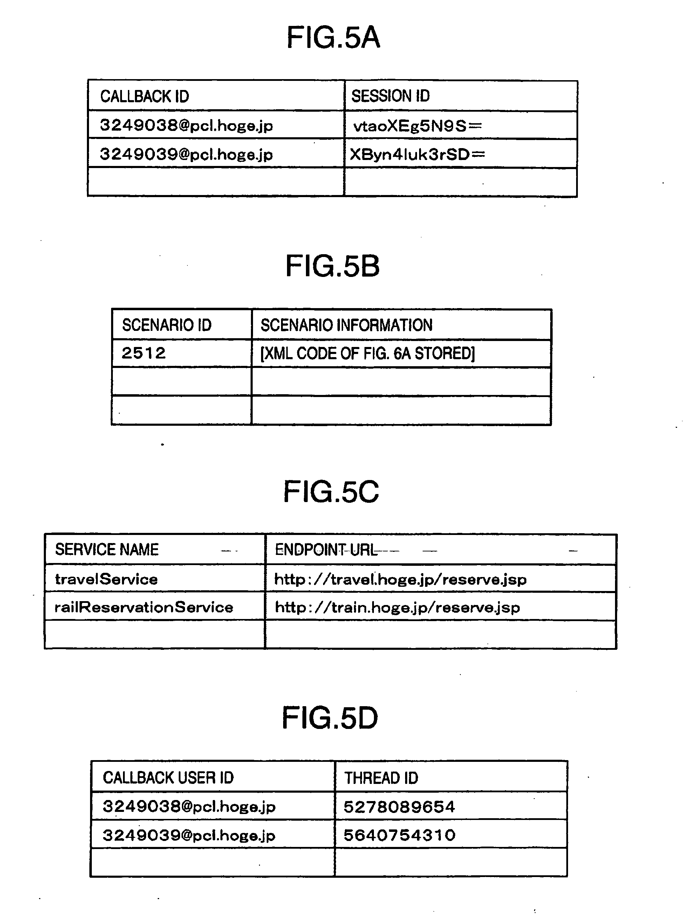

Here, a description will be given regarding each item of callback management table CIM1-a shown in Fig. 5A. In the callback ID, there is recorded a callback user ID issued by callback ID management subpart CIM1. In the session ID, there is recorded a session ID which is an argument of callback ID acquisition request S1-2.

Let us return to the description of Fig. 3. Callback ID management subpart CIM1 of callback ID management part CIM transmits a callback ID acquisition response S1-3 including the callback user ID as an argument to callback control part CC. Callback ID acquisition response S1-3 is binary data including a callback user ID and is transmitted by socket communication to callback control part CC.

When callback ID management part interface CC4 of callback control part CC receives callback ID acquisition response S1-3 from callback ID management part CIM, it transmits a service request S1-4 including a callback ID and service execution parameters to Web portal server WP as arguments. In service request S1-4, an HTTP GET message is utilized.

When portal application WP1 of Web portal server WP receives a service request S1-4 from callback ID management part CIM, it determines a scenario to be executed from an access URL having a designation from user terminal US (A1-3). Thereafter, it generates a scenario execution request S1-5 including, as arguments, a callback user ID, a scenario ID, and service execution parameters, and transmits the same to scenario execution server SES.

In scenario execution request S1-5, there is used a SOAP request message specified by scenario execution server SES. SOAP (Simple Object Access Protocol) is a communication protocol for implementing communication between objects which has been established W3C (World Wide Web Consortium) which is a standardization body for WWW (World Wide Web) related technology.

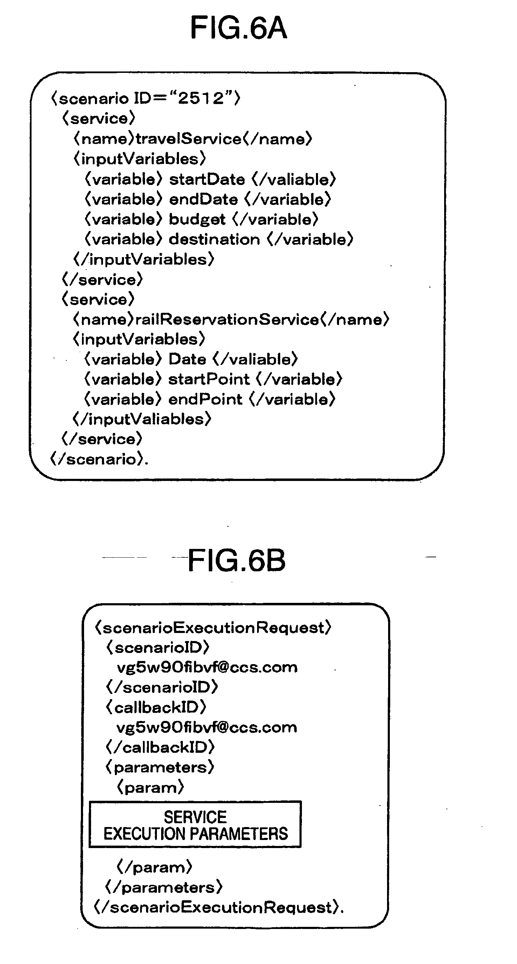

Fig. 6B is one where the principal portions from among the SOAP messages of scenario execution request S1-5 have been extracted. In the "scenario ID" tag element, there is recorded a scenario ID value. In the "callbackID" tag element, there is recorded a callback user ID value. In the "parameters" tab element, a plurality of "param" tags can be recorded, individual service execution parameter values being recorded in each "param" tag element.

Let us return to the description of Fig. 3. When scenario execution request part SES2 of scenario execution server SES receives scenario execution request S1-5 from Web portal server WP, it searches scenario table SES1-b regarding scenario information, taking the scenario ID to be the key. For the scenario information, XML compliant with BPEL is used.

Here, a description will be given regarding each item of scenario table SES1-b, shown in Fig. 5B. In the scenario ID, there is recorded a scenario ID which is an argument of scenario execution request S1-5. In the scenario information, there are recorded scenario information references indicating the execution sequence of the collaborative service.

Scenario information indicating the execution sequence of a collaborative service is recorded on the basis of BPEL. Fig. 6A is a diagram in which the principal portions have been extracted from among the scenario information BPEL documents. The "scenario" tag is a tag that includes all scenario information, holding a plurality of service tags as subsidiary elements and also holding a scenario ID value ("2512" in Fig. 6A) as an attribute value. The "service" tag is a tag recording information pertaining to the called Web service provisioning server WS and holds a "name" tag indicating the name of a service and an "inputVariables" tag including all service execution parameters as subsidiary elements. Also, the "inputVariables" tag records various pieces of variables information as the contents of a subsidiary element "variable" tag.

Let us return to Fig. 3. Since the search result and scenario information corresponding to a scenario ID as shown in Fig. 5B are registered in scenario execution engine SES 1 of scenario execution server SES, scenario information pertaining to scenario execution is acquired from scenario table SES1-b (A1-4).

Next, scenario execution engine SES1 of scenario execution server SES looks up service table SES1-a regarding the URL of Web service WS and the parameters needed for execution of Web service WS, taking as the key a service name recorded in scenario information S1-a.

Here, a description will be given regarding each item of service table SES1-a shown in Fig. 5C. In the service name, there is recorded the service name that is the same as the element of the "service" tag which is recorded in the acquired scenario information. In the endpoint URL, there is recorded the URL (service URL) of the destination to which collaborative service execution request S1-6 is transmitted in the Web service call.

Since the search result and a service URL corresponding to a service name as shown in Fig. 5C are registered in scenario execution engine SES1 of scenario execution server SES, the URLs of are acquired from service table SES1-a (A1-5). Next, a collaborative service execution request S1-6 including as arguments a callback user ID, a scenario execution ID, and service execution parameters is transmitted to respectively Web service provisioning server WS1 and Web service provisioning server WS2. In collaborative service execution request S1-6, there are used SOAP request messages defined respectively by Web service provisioning server WS1 and Web service provisioning server WS2.

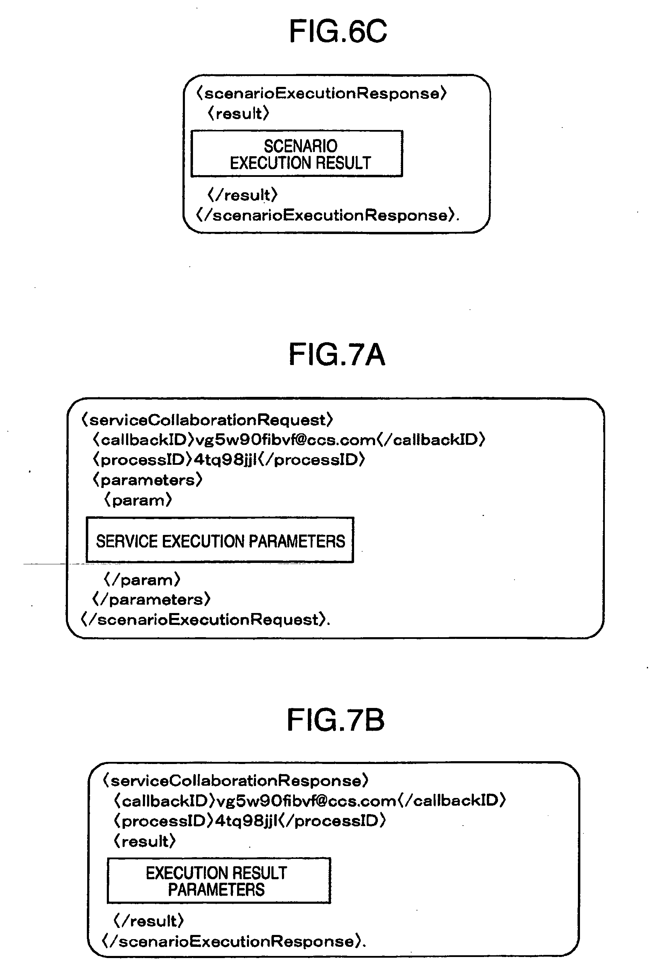

Fig. 7A is a diagram in which the principal portions have been extracted from among the SOAP messages of collaborative service execution request S1-6. In the "callbackID" tag element, there is a recorded a callback user ID value. In the "processID" tag element, there is recorded a scenario execution ID value. In the "parameters" tag element, it is possible to record a plurality of "param" tags, various service execution parameter values being recorded in each "param" tag.

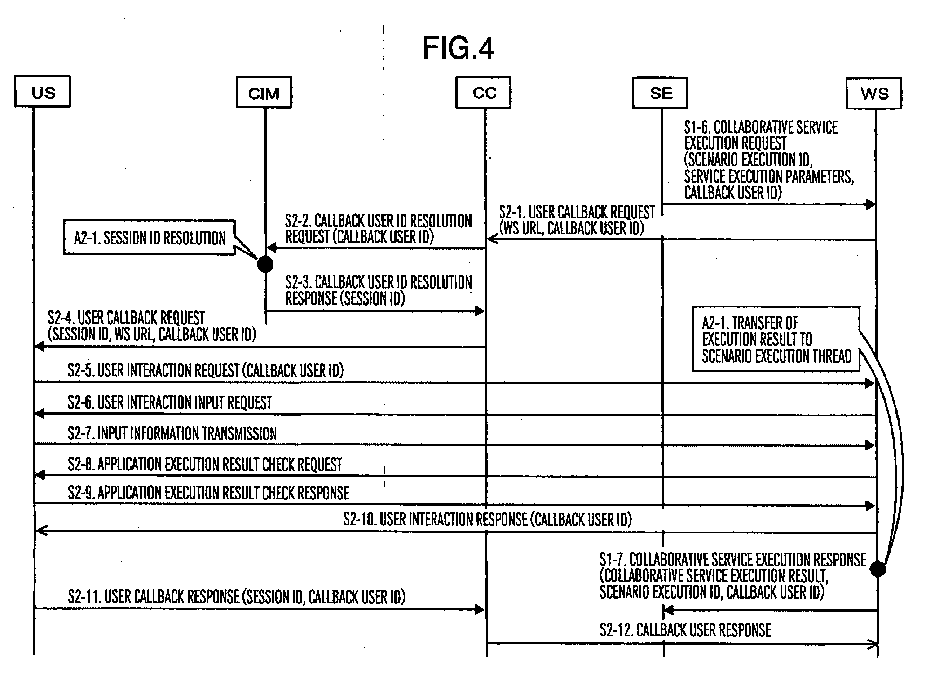

Next, regarding collaborative service execution including user interaction processing, a description will be given using the example of the collaborative service execution sequence of Fig. 4. When scenario execution interface WS-1 of Web service provisioning server WS receives collaborative service execution request S1-6 from scenario execution server SES, control module WS-4 links a scenario execution ID acquired as an argument and a thread ID in the scenario execution interface and registers the same in execution process management table WS-4-a.

Here, a description will be given regarding each item of execution process management table WS-4-a shown in Fig. 5D. In the callback user ID, there is recorded a callback user ID which is an argument of collaborative service execution request S1-6. In the thread ID record, there is recorded a thread ID in the scenario execution interface having received collaborative service execution request.

Let us return to the description of Fig. 4. Control module WS-4 of Web service provisioning server WS designates, on the basis of a callback user ID, the callback control part CC that is the destination of the callback request. Thereafter, callback client WS-2 transmits a user callback request S2-1, including the URL of Web service provisioning server WS and the callback user ID as arguments, to callback control part CC.

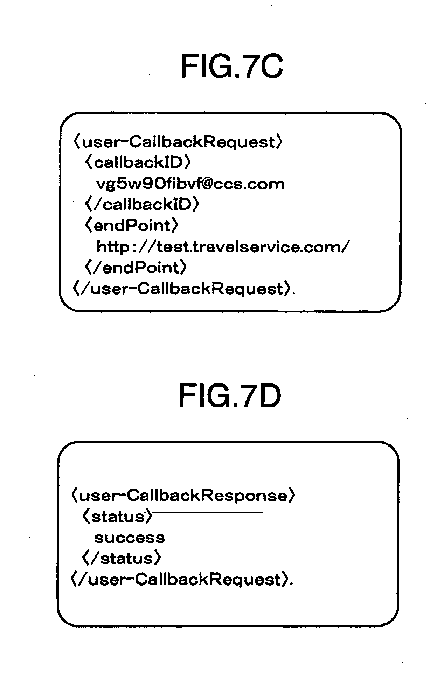

Fig. 7C is a diagram in which there have extracted the principal portions from among the SOAP messages of user callback request S2-1. In the "callbackID" tag element, the value of the callback user ID is recorded. In the "endPoint" tag element, there is recorded the value of the URL accessed by Web service provisioning server WS and which will serve as the communication partner with whom the user will start interaction by means of callback processing.

Let us return to the description of Fig. 4. When WS-oriented interface CC1 of callback control part CC receives a user callback request S2-1 from Web service provisioning server WS, callback ID management part interface CC4 transmits callback user ID resolution request S2-2, including the callback user ID as an argument, to callback management part CIM. Callback user ID resolution request S2-2 is binary data including a callback user ID and is transmitted to callback management part CIM by means of socket communication.

When callback management subpart CIM1 of callback management part CIM receives callback user ID resolution request S2-2 from callback control part CC, it looks up callback management table CIM1-a regarding the callback user ID included in the received message.

As a result of the search, callback management table CIM1-a becomes as shown in Fig. 5A, corresponding session IDs being acquired from the callback user IDs (A2-1). Thereafter, a callback user ID resolution response S2-3 including the session IDs as arguments is transmitted to callback control part CC. Callback user ID resolution response S2-3 is binary data including session IDs and is transmitted by socket communication to computer virtualization control part CC.

When callback ID management part interface CC4 of callback control part CC receives callback user ID resolution response S2-3 from callback management part CIM, US-oriented interface CC2 transmits a user callback request S2-4 including as arguments the URL of Web service provisioning server WS, a callback user ID, and a session ID to the user terminal US linked with the acquired session ID. In user callback request S2-4, there is set the URL of Web service provisioning server WS in the "Location" header utilizing the HTTP 302 "Moved temporarily" message.

When Web browser US 1 of user terminal US receives user callback request S2-4 from callback control part CC, it checks the "Location" header and extracts the URL of Web service provisioning server WS. And then, a user interaction request S2-5 including callback user IDs as arguments is transmitted to Web service provisioning server WS. In user interaction request S2-5, an HTTP GET message is utilized and the return URL of callback management part CIM is set in the "Referrer" header.

When an HTTP UI WS-3 of Web service provisioning server WS receives user interaction request S2-5 from user terminal US, an application WS-5 transmits, to user terminal US, a user interaction input request S2-6 including the HTML screens needed for user interaction processing as arguments. In user interaction input request S2-6, an HTTP 200 OK message is utilized.

When Web browser US 1 of user terminal US receives user interaction input request S2-6 from Web service provisioning server WS, information is input to the input form displayed on Web browser US1. When the input comes to an end, an input information transmission message S2-7 is transmitted to Web service provisioning server WS. In input information transmission message S2-7, an HTTP GET message is utilized.

When HTTP UI WS-3 of Web service provisioning server WS receives input information transmission message S2-7 from user terminal US, application WS-5 executes application WS-5 on the basis of the input information. In case the execution of WS-5 has not succeeded, user interaction input request S2-5 is transmitted for a second time to user terminal US. In case the execution of application WS-5 has succeeded, an application execution result check request S2-8 including the execution result of application WS-5 as an argument is transmitted to user terminal US. In application execution result check request S2-8, an HTTP 200 OK message is utilized.

When Web browser US 1 of user terminal US receives application execution result check request S2-8 from Web service provisioning server WS, the user checks the execution result displayed on Web browser US1. If the execution result is good, an application execution result check response S2-9 is transmitted to Web service provisioning server WS as approval processing. In application execution result check response S2-9, an HTTP GET message is utilized.

When HTTP UI WS-3 of Web service provisioning server WS receives application execution result check response S2-9 from user terminal US, application WS-5 establishes the execution result. Thereafter, a user interaction response S2-10 is transmitted to user terminal US as an asynchronous message. In user interaction message response S2-10, an HTTP 302 "Moved temporarily" message is utilized.

Thereafter, application WS-5 of Web service provisioning server WS transfers the callback user ID and the execution result to control module WS-4. When control module WS-4 acquires the callback user ID and the execution result, it finds out, from among the call back user IDs acquired from the scenario execution interface, whether anyone is matching to resolve the thread ID. Since the scenario execution thread is designated in this way, the service execution result is transferred to the same scenario execution thread (A2-2).

On the other hand, when Web browser US 1 of user terminal US receives user interaction response S2-10 from Web service provisioning server WS, it transmits a user callback response S2-11 including a session ID and a callback user ID as arguments to callback control part CC. In user callback response S2-11, an HTTP 302 "Moved temporarily" message is utilized, and the return URL of callback management part CIM is set in the "Location" header.

When US-oriented interface CC2 of callback control module CC receives user callback response S2-11 from user terminal US, it transmits a user callback response S2-12 to Web service provisioning server WS. And then, Web service provisioning server WS receives user callback response S2-12.

Fig. 7D is a diagram in which the principal portions have been extracted from among the SOAP messages of user callback response S2-12 and in the "status" tag element, "success" is recorded if the execution result is a success and "fail" if it is a failure.

This concludes the series of processes to carry out human interaction.

Let us return to the description of Fig. 3. When Web service execution comes to an end, scenario execution interface WS1-1 of Web service provisioning server WS1 and scenario execution interface WS2-1 of Web service provisioning server WS2 transmit, to scenario execution server SES, a collaborative service execution response S1-7 including the collaborative service execution result, the scenario execution ID and the callback user ID as arguments.

Fig. 7B is a diagram in which the principal portions have been extracted from among the SOAP messages of collaborative service execution response S1-7. In the "callbackID" tag element, there is recorded the value of the callback user ID. In the "processID" tag element, there is recorded the value of the scenario execution ID. In the "result" tag element, the execution result of each Web service provisioning server WS is recorded in text format. In the case where the execution result is in binary format, it is recorded after encoding to text format.

When scenario execution engine SES 1 of scenario execution server SES receives collaborative service execution response S1-7 from Web service provisioning server WS1 and Web service provisioning server WS2, scenario execution reception part SES2 transmits a scenario execution response S1-8 including the collaborative service execution result and the callback user IDs as arguments to Web portal server WP.

Fig. 6C is a diagram in which the principal portions have been extracted from among the SOAP messages of scenario execution response S1-8 and in the "result" tag element, the execution result of each Web service provisioning server WS are recorded in text format. In the case where the execution result is in binary format, it is recorded after encoding to text format.

Let us return to the description of Fig. 3. When portal application WP1 of Web portal server WP receives scenario execution response S1-8 from scenario execution server SES, it generates execution result HTML code obtained by processing the scenario execution result into HTML format. And then, it transmits a service response S1-9 including the execution result HTML code and a callback user ID as arguments to callback control part CC. In service response S1-9, the HTTP 200 OK message is utilized.

When WP-oriented interface CC5 of callback control part CC receives service response S1-9 from Web portal server WP, it resolves the session ID from the callback user ID (A1-6). Thereafter, US-oriented interface CC2 transmits service response S1-10 including the execution result HTML code and the session ID as arguments to the user terminal US linked with the resolved session ID. In service response S1-10, an HTTP 200 OK message is utilized.

When Web browser US 1 of user terminal US receives service response S1-10 from callback control part CC, it renders the received execution result HTML code and displays it on Web browser US1.

This concludes the functioning in the case where a user, using a user terminal, utilizes application WP1 furnished by Web portal server WP.

Regarding the present embodiment described above, there exist several variations. First, a statement regarding a variation based on the callback method will be given.

As for the method mentioned so far, when carrying out callback from a Web service provisioning server WS via a callback control server CCS to a user terminal US, the communication from callback control server CCS to user terminal US utilizes HTTP redirection. This mode can be adapted not only to PCs (Personal Computers) or portable terminals but also in the case of providing a service assuming the use of only a Web browser such as digital television.

As another method, it may be devised so that a callback ID management part CIM exists as part of a Web portal server and callback ID management part CIM manages the e-mail address of the user and carries out callback using this e-mail address.

As yet another method, the callback may be carried out using a communication ID managed by a carrier such as SIP-URI (Session Initiation Protocol - Uniform Resource Identifier). In this case, callback ID management part CIM exists as a service managing various IDs, the Web portal server makes an enquiry to callback ID management part CIM and acquires a carrier-managed communication ID from the user IDs used in the portal. In this case, a launcher function receiving callback requests and launching anew Web browser US1 becomes newly necessary in user terminal US.

Next, regarding the HCI control method as well, there are a number of variations. In a mode where callback control part CC mediates between Web service provisioning servers WS as a forward proxy with respect to user terminal US, there can be obtained the same effect as with technology using a conventional proxy. In other words, effects such as ciphering with respect to Web service provisioning server WS of user terminal US information (IP address and the like), caching of input information from user terminal US, and caching or weight reduction of content delivered to user terminal US from Web service provisioning server WS can be expected.

Further, the present invention is not limited to each of the aforementioned embodiments. A person skilled in the art would be able to carry out various additions, modifications, and the like within the scope of the present invention. E.g., he would be able to suitably combine each of the aforementioned embodiments.

## Claims

1. A service collaboration system in which a user terminal (US) calls Web service provisioning servers (WS) in sequence via a Web portal server (WP) and a service scenario execution server (SES) and each Web service provisioning server (WS) carries out interaction processing with said user terminal (US); and comprising a callback control server (CCS) having:
a callback control part (CC) responding to the reception, from said Web service provisioning servers (WS), of a callback request being accompanied by a callback user ID and transmitting an interaction processing start request to said user terminal (US) using an ID identifying said user terminal (US) or a session due to said user terminal (US); and
a callback ID management part (CIM) associating and managing said ID and said callback user ID and acquiring said ID corresponding to said callback user ID.

2. The service collaboration system according to Claim 1, wherein:
said callback control part (CC) responds to the reception of a service request from said user terminal (US) to said Web service provisioning server (WS), transmits said ID to said callback ID management part (CIM), acquires said callback user ID from said callback ID management part (CIM), confers said acquired callback user ID to said service request, transmits to said Web portal server (WP) said service request to which said callback user ID has been conferred, requests said ID corresponding to said callback user ID accompanying said callback request to said callback ID management part (CIM), and acquires said ID corresponding to said callback user ID from said callback ID management part (CIM); and
said callback ID management part (CIM) acquires said ID from said callback
control part (CC), generates said callback user ID corresponding to said acquired ID, transmits said generated callback user ID to said callback control part (CC), acquires said callback user ID accompanying said callback request from said callback control part (CC), and transmits said ID corresponding to said acquired callback user ID to said callback control part (CC).

3. The service collaboration system to Claim 2, wherein:
said callback control part (CC) caches input information from said user terminal to said Web service provisioning server (WS) and content delivered from said Web service provisioning server (WS) to said user terminal (US).

4. The service collaboration system according to Claim 2, wherein:
said callback control part (CC) removes information for which ciphering is necessary with respect to said Web service provisioning server (WS), from the input information from said user terminal (US) to said Web service provisioning server (WS), and transmits said input information, from which information for which ciphering is necessary has been removed, to said Web service provisioning server (WS).

5. The service collaboration system according to Claim 1, wherein:
said Web portal server (WP) transmits a user ID used by said Web portal server (WP) to said callback ID management part (CIM), acquires said callback user ID corresponding to said user ID from said callback ID management part (CIM), and transmits said acquired callback user ID as a parameter to said service scenario execution server (SES); and
said callback ID management part (CIM) responds to the acquisition of said user ID from said Web portal server (WP), generates said callback user ID corresponding to said user ID, and transmits said generated callback user ID to said Web portal server (WP).

6. The service collaboration system according to Claim 5, wherein:
said callback control part (CC) caches information from said user terminal (US) to said Web service provisioning server (WS) and content delivered from said Web service provisioning server (WS) to said user terminal (US).

7. The service collaboration system according to Claim 5, wherein:
said callback control part (CC) removes information for which ciphering is necessary with respect to said Web service provisioning server (WS), from the input information from said user terminal (US) to said Web service provisioning server (WS), and transmits said input information, from which information for which ciphering is necessary has been removed, to said Web service provisioning server (WS).

## Patentansprüche

1. Gemeinschaftliches Dienstsystem, in welchem ein Teilnehmergerät (US) Webdienst-Versorgungsserver (WS) nacheinander über einen Webportalserver (WP) und einen Dienstszenarien-Ausführungsserver (SES) ruft und jeder Webdienst-Versorgungsserver (WB) eine Interaktionsverarbeitung mit dem Teilnehmergerät (US) ausführt; und mit einem Rückruf-Steuerungsserver (CCS), der aufweist:
ein Rückruf-Steuerteil (CC), das auf den Empfang einer Rückrufanfrage von den Webdienst-Versorgungsservern (WS) reagiert, die von einer Rückruf-Teilnehmer-ID begleitet ist und eine Interaktionsverarbeitungs-Startanfrage an das Teilnehmergerät (US) unter Verwendung einer ID (Kennung) überträgt, die das Teilnehmergerät (US) oder eine Sitzung aufgrund des Teilnehmergeräts (US) identifiziert; und
ein Rückruf-ID-Managementteil (CIM), das die ID und die Rückruf-Teilnehmer-ID zuordnet und managt und die der Rückruf-Teilnehmer-ID entsprechende ID erfasst.

2. Gemeinschaftliches Dienstsystem nach Anspruch 1, wobei:
das Rückruf-Steuerteil (CC) auf den Empfang einer Dienstanfrage von dem Teilnehmergerät (US) an den Webdienst-Versorgungsserver (WS) reagiert, die ID an das Rückruf-ID-Managementteil (CIM) überträgt, die Rückruf-Teilnehmer-ID von dem Rückruf-ID-Managementteil (CIM) erfasst, die erfasste Rückruf-Teilnehmer-ID auf die Dienstanfrage überträgt, die Dienstanfrage, auf welche die Rückruf-Teilnehmer-ID übertragen worden ist, an den Webportalserver (WP) überträgt, die ID anfordert, die der Rückruf-Teilnehmer-ID entspricht, welche die Rückrufanfrage zum Rückruf-ID-Managementteil (CIM) begleitet, und die ID, die der Rückruf-Teilnehmer-ID entspricht, von dem Rückruf-ID-Managementteil (CIM) erfasst; und
das Rückruf-ID-Managementteil (CIM) die ID von dem Rückruf-Steuerteil (CC) erfasst, die Rückruf-Teilnehmer-ID erzeugt, die der erfassten ID entspricht, die erzeugte Rückruf-Teilnehmer-ID an das Rückruf-Steuerteil (CC) überträgt, die Rückruf-Teilnehmer-ID erfasst, die die Rückrufanfrage von dem Rückruf-Steuerteil (CC) begleitet und die ID, die der erfassten Rückruf-Teilnehmer-ID entspricht, an das Rückruf-Steuerteil (CC) überträgt.

3. Gemeinschaftliches Dienstsystem nach Anspruch 2, wobei:
das Rückruf-Steuerteil (CC) Eingabeinformation von dem Teilnehmergerät an den Webdienst-Versorgungsserver (WS) und von dem Webdienst-Versorgungsserver (WS) an das Teilnehmergerät (US) gelieferten Inhalt cacht.

4. Gemeinschaftliches Dienstsystem nach Anspruch 2, wobei:
das Rückruf-Steuerteil (CC) Information, für welche eine Chiffrierung in Bezug auf den Webdienst-Versorgungsserver (WS) notwendig ist, aus der Eingabeinformation von dem Teilnehmergerät (US) an den Webdienst-Versorgungsserver (WS) entfernt und die Eingabeinformation, aus welcher Information, für die eine Chiffrierung notwendig ist, entfernt worden ist, an den Webdienst-Versorgungsserver (WS) überträgt.

5. Gemeinschaftliches Dienstsystem nach Anspruch 1, wobei:
der Webportalserver (WP) eine von dem Webportalserver (WP) verwendete Teil-nehmer-ID an das Rückruf-ID-Managementteil (CIM) überträgt, die Rückruf-Teilnehmer-ID, die der Teilnehmer-ID entspricht, von dem Rückruf-ID-Managementteil (CIM) erfasst und die erfasste Rückruf-Teilnehmer-ID als Parameter an den Dienstszenarien-Ausführungsserver (SES) überträgt; und
das Rückruf-ID-Managementteil (CIM) auf die Erfassung der Teilnehmer-ID von dem Webportalserver (WP) reagiert, die Rückruf-Teilnehmer-ID, die der Teilnehmer-ID entspricht, erzeugt und die erzeugte Rückruf-Teilnehmer-ID an den Webportalserver (WP) überträgt.

6. Gemeinschaftliches Dienstsystem nach Anspruch 5, wobei:
das Rückruf-Steuerteil (CC) Information von dem Teilnehmergerät (US) an den Webdienst-Versorgungsserver (WS) und von dem Webdienst-Versorgungsserver (WS) an das Teilnehmergerät (US) gelieferten Inhalt cacht.

7. Gemeinschaftliches Dienstsystem nach Anspruch 5, wobei:
das Rückruf-Steuerteil (CC) Information, für welche eine Chiffrierung in Bezug auf den Webdienst-Versorgungsserver (WS) notwendig ist, aus der Eingabeinformation von dem Teilnehmergerät (US) an den Webdienst-Versorgungsserver (WS) entfernt und die Eingabeinformation, aus welcher Information, für die eine Chiffrierung notwendig ist, entfernt worden ist, an den Webdienst-Versorgungsserver (WS) überträgt.

## Revendications

1. Système de collaboration de service dans lequel un terminal utilisateur (US) appelle des serveurs de fourniture de services Web (WS) en séquence par l'intermédiaire d'un serveur de portail Web (WP) et d'un serveur d'exécution de scénario de service (SES) et chaque serveur de fourniture de services Web (WS) réalise un traitement d'interaction avec ledit terminal utilisateur (US) ; et comprenant un serveur de commande de rappel (CCS) ayant :
une partie de commande de rappel (CC) répondant à la réception, en provenance desdits serveurs de fourniture de services Web (WS), d'une demande de rappel qui est accompagnée d'un ID d'utilisateur de rappel et transmettant une demande de début de traitement d'interaction audit terminal utilisateur (US) en utilisant un ID identifiant ledit terminal utilisateur (US) ou une session due audit terminal utilisateur (US) ; et
une partie de gestion d'ID de rappel (CIM) associant et gérant ledit ID et ledit ID d'utilisateur de rappel et acquérant ledit ID correspondant audit ID d'utilisateur de rappel.

2. Système de collaboration de service selon la revendication 1, dans lequel :
ladite partie de commande de rappel (CC) répond à la réception d'une demande de service dudit terminal utilisateur (US) vers ledit serveur de fourniture de services Web (WS), transmet ledit ID à ladite partie de gestion d'ID de rappel (CIM), acquiert ledit ID d'utilisateur de rappel provenant de ladite partie de gestion d'ID de rappel (CIM), confère ledit ID d'utilisateur de rappel acquis à ladite demande de service, transmet audit serveur de portail Web (WP) ladite demande de service à laquelle ledit ID d'utilisateur de rappel a été conféré, demande ledit ID correspondant audit ID d'utilisateur de rappel accompagnant ladite demande de
rappel à ladite partie de gestion d'ID de rappel (CIM), et acquiert ledit ID correspondant audit ID d'utilisateur de rappel provenant de ladite partie de gestion d'ID de rappel (CIM) ; et
ladite partie de gestion d'ID de rappel (CIM) acquiert ledit ID provenant de ladite partie de commande de rappel (CC), génère ledit ID d'utilisateur de rappel correspondant audit ID acquis, transmet ledit ID d'utilisateur de rappel généré à ladite partie de commande de rappel (CC), acquiert ledit ID d'utilisateur de rappel accompagnant ladite demande de rappel provenant de ladite partie de commande de rappel (CC), et transmet ledit ID correspondant audit ID d'utilisateur de rappel acquis à ladite partie de commande de rappel (CC).

3. Système de collaboration de service selon la revendication 2, dans lequel :
ladite partie de commande de rappel (CC) cache des informations d'entrée provenant dudit terminal utilisateur sur ledit serveur de fourniture de services Web (WS) et un contenu distribué à partir dudit serveur de fourniture de services Web (WS) sur ledit terminal utilisateur (US).

4. Système de collaboration de service selon la revendication 2, dans lequel :
ladite partie de commande de rappel (CC) retire des informations pour lesquelles un chiffrage est nécessaire par rapport audit serveur de fourniture de services Web (WS), à partir des informations d'entrée provenant dudit terminal utilisateur (US) vers ledit serveur de fourniture de services Web (WS), et transmet lesdites informations d'entrée, dont des informations pour lesquelles un chiffrage est nécessaire ont été retirées, audit serveur de fourniture de services Web (WS).

5. Système de collaboration de service selon la revendication 1, dans lequel :
ledit serveur de portail Web (WP) transmet un ID d'utilisateur utilisé par ledit serveur de portail Web (WP) à ladite partie de gestion d'ID de rappel (CIM), acquiert ledit ID d'utilisateur de rappel correspondant audit ID d'utilisateur provenant de ladite partie de gestion d'ID de rappel (CIM), et transmet ledit ID d'utilisateur de rappel acquis en tant que paramètre audit serveur d'exécution de scénario de service (SES) ; et
ladite partie de gestion d'ID de rappel (CIM) répond à l'acquisition dudit ID d'utilisateur à partir dudit serveur de portail Web (WP), génère ledit ID d'utilisateur de rappel correspondant audit ID d'utilisateur, et transmet ledit ID d'utilisateur de rappel généré audit serveur de portail Web (WP).

6. Système de collaboration de service selon la revendication 5, dans lequel :
ladite partie de commande de rappel (CC) cache des informations provenant dudit terminal utilisateur (US) audit serveur de fourniture de services Web (WS) et un contenu distribué provenant dudit serveur de fourniture de services Web (WS) audit terminal utilisateur (US).

7. Système de collaboration de service selon la revendication 5, dans lequel :
ladite partie de commande de rappel (CC) retire des informations pour lesquelles un chiffrage est nécessaire par rapport audit serveur de fourniture de services Web (WS), à partir des informations d'entrée provenant dudit terminal utilisateur (US) vers ledit serveur de fourniture de services Web (WS), et transmet lesdites informations d'entrée, dont des informations pour lesquelles un chiffrage est nécessaire ont été retirées, audit serveur de fourniture de services Web (WS).
